# EUROPÄISCHE PATENTANMELDUNG

(11) **EP 1 336 766 A2**
(43) Veröffentlichungstag der Anmeldung: **20.08.2003**
(21) Anmeldenummer: 03000912.0
(22) Anmeldetag: 16.01.2003
(51) Int. Cl.: F16C 29/04

(54) **Linearführung**

(30) Priorität: 16.02.2002 DE 20202417 U
(71) Anmelder: Horst Witte Entwicklungs- und Vertriebs-KG, 21369 Nahrendorf (DE)
(72) Erfinder: Witte, Andreas, 21354 Bleckede (DE)
(74) Vertreter: von Raffay, Vincenz, Dipl.-Ing.

(57) **Zusammenfassung**

Die Linearführung für ein Führungs- oder Hubelement (3), bei dem es sich beispielsweise um ein Aufspannteil (2) eines Werkstück-Aufspannsystems handelt, ist über in einem Käfig (5) angeordnete Wälzkörper (6) an einem ortfesten Gestell abgestützt. Um die Übertragung der Kipp- und Biegekräfte zu verbessern, in dem sämtliche Wälzkörper, auch die aus dem Gestell heraus bewegten, an der Kraftübertragung teilnehmen, sind die Wälzkörper (6) in dem lastaufnehmenden Käfig (5) kraftschlüssig, d.h. zur Kraftübertragung gelagert. Hierdurch wird erreicht, daß sämtliche Wälzkörper zur Kraftübertragung herangezogen werden. Es wird nicht nur eine kompakte Bauweise erreicht, sondern bei gleichem Hub wird für eine größere Steifigkeit gesorgt, oder umgekehrt bei einem größerem Hub wird eine entsprechend gleiche Steifigkeit erzielt (Fig.1).

## Beschreibung

Die Erfindung betrifft eine Linearführung nach dem Oberbegriff des Anspruches 1.

Derartige Linearführungen werden in sehr unterschiedlichen Anwendungsformen ausgestaltet und eingesetzt. Das Führungselement ist gradlinig relativ zu dem ortsfesten Gestell bewegbar. Abgestützt ist das Führungselement über Wälzkörper, vorzugsweise zylindrische Rollen, die in einem Käfig formschlüssig gehalten sind, so daß sie sich entsprechend ohne Reibung abwälzen. Der Käfig verhindert, daß die Wälzkörper sich berühren. Die Käfige bewegen sich praktisch um die halbe Wegstrecke, die das Führungselement bewegt wird. Das Führungselement, das eine Hubsäule oder auch ein schubladenartiges Teil sein kann, ragt je nach Durchführung der entsprechenden Bewegung aus dem ortsfesten Gestell heraus, wodurch Biege- und Kippkräfte auftreten.

Der Erfindung liegt nun die Aufgabe zugrunde eine Linearführung der eingangs genannten Art zu schaffen, bei der die Übertragung der Kipp- und Biegekräfte verbessert wird und zwar dadurch, daß sämtliche Wälzkörper, auch die aus dem Gestell heraus bewegten, an dieser Kraftübertragung teilnehmen.

Diese Aufgabe wird grundsätzlich durch das Kennzeichen des Anspruches 1 gelöst.

Erfindungsgemäß sind die Wälzkörper nicht nur formschlüssig, sondern kraftschlüssig in dem Käfig gelagert. Hierdurch wird erreicht, daß sämtliche Wälzkörper auch diejenigen, die sich lediglich an dem heraus bewegten Führungselement abstützen, zur Kraft- und Momentenübertragung beitragen, d.h. herangezogen werden. Dadurch wird nicht nur eine günstigere Bauweise ermöglicht, sondern bei gleichem Hub wird für eine größere Steifigkeit gesorgt, oder bei einem größeren Hub wird eine entsprechend gleiche Steifigkeit erzielt. Die in dem heraus bewegten Führungselement auftretenden Biege- und Kippkräfte werden von den Wälzkörpern aufgenommen und über den Käfig auf die in dem Gestell liegenden Wälzkörper übertragen und dort abgeleitet.

In vorteilhafter Weise kann die Linearführung so ausgebildet sein, wie in den Ansprüchen 2 und 3 angegeben.

Die Linearführung ist beispielsweise einsetzbar in Verbindung mit Aufspannsystemen, wie sie aus der EP 0 222 147 B1 bekannt sind. Das Führungs- oder Hubelement nimmt dann ein Aufspannelement auf, an dem ein Werkstück befestigt werden kann.

Im folgenden wird die Erfindung unter Hinweis auf die Zeichnung anhand verschiedener Ausführungsbeispiele näher erläutert.

Es zeigt:
- Fig. 1: eine teilweise geschnittene perspektivische Ansicht einer Ausführungsform einer Linearführung nach der Erfindung;
- Fig. 2: eine perspektivische Ansicht einer Ausführungsform eines Käfigs mit in diesem kraftschlüssig gelagerten Rollen als Wälzkörpern;
- Fig. 3: eine der Fig. 2 entsprechende perspektivische Ansicht, jedoch eines zweischenkligen Käfigs; und
- Fig. 4: einen Schnitt durch eine Ausführungsform eines Käfigs mit besonders gelagerten Rollen als Wälzkörper.

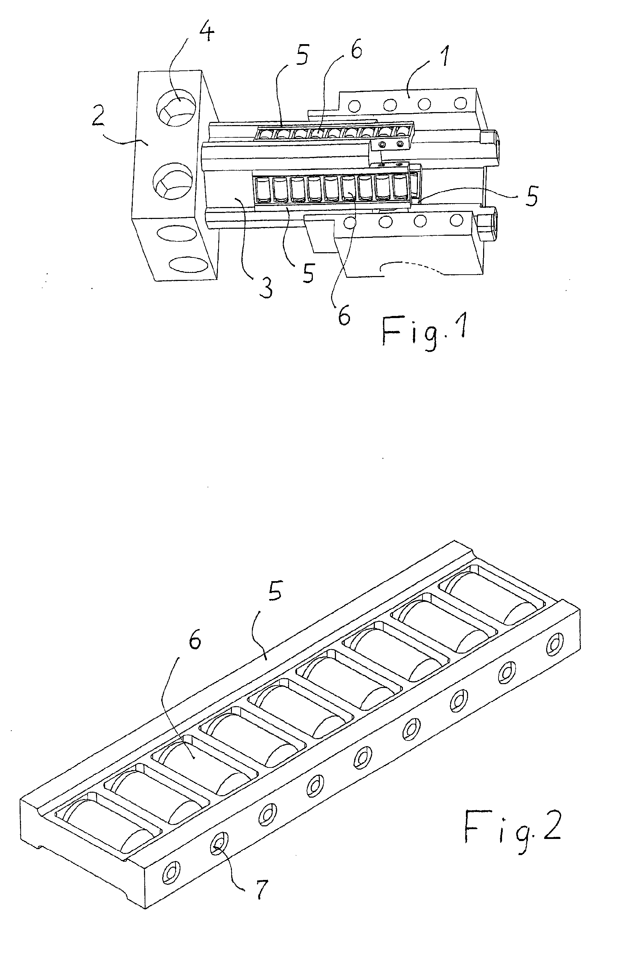

In Fig. 1 ist eine Ausführungsform einer Linearführung dargestellt, bei der das Führungs- oder Hubelement 3 im Querschnitt dreieckförmig ausgebildet ist. Das ortsfeste Gestell, zu dem das Führungselement 3 in Achsrichtung relativ bewegbar ist, ist mit 1 bezeichnet.

Die Abstützung des Führungselementes 3 in dem Gestell 1 erfolgt über Wälzkörper 6, die in Käfigen 5 kraftschlüssig gelagert sind. In Fig. 2 ist ein solcher Käfig 5 mit einer Anzahl nebeneinander und parallel zueinander angeordneten Rollen 6 als Wälzkörper dargestellt. Die Lagerung in dem Käfig ist mit 7 bezeichnet. Durch diese Art der kraftschlüssigen Lagerung der Rollen 6 in dem Käfig ist es möglich, daß der Käfig zum tragenden Element wird und Biege- und Kippkräfte überträgt. Sämtliche Rollen nehmen an der Übertragung der Kräfte teil. Hierdurch wird bei gleicher Bauweise die Steifigkeit erhöht, oder es ist ein entsprechend größerer Hub möglich, ohne daß Abstriche an der Kraftübertragung gemacht werden müssen.

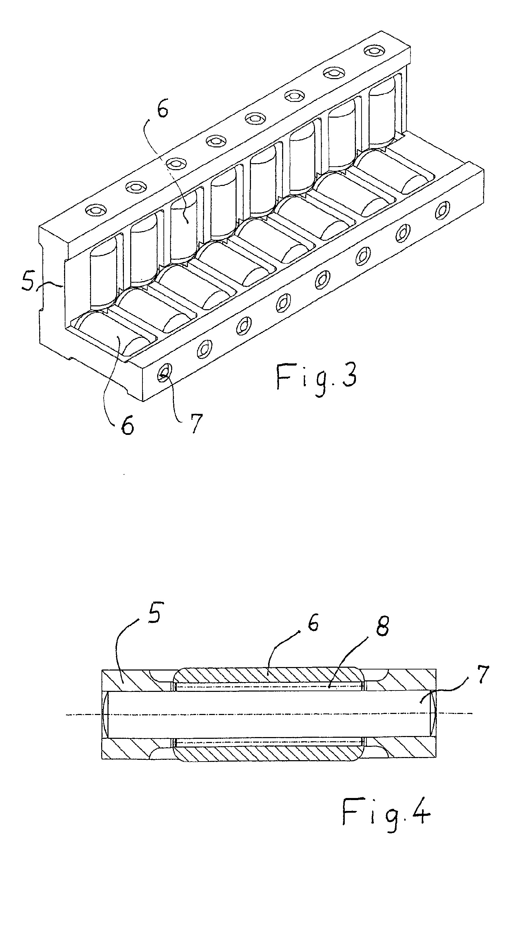

In Fig. 3 ist ein zweischenkliger Käfig 5 dargestellt, in dem ebenfalls Rollen 6 bei 7 kraftschlüssig gelagert sind. Die Lagerachsen der Rollen in dem einen Schenkel des Käfigs sind relativ zu den Lagerachsen der Rollen in dem anderen Schenkel versetzt.

In Fig. 4 ist eine Ausführungsform einer Rolle 6 dargestellt, die den Wälzkörper bildet. Die Rolle 6 ist hohl ausgebildet und mit Hilfe von Nadeln 8 auf einer Welle 7 gelagert, die in dem Käfig 5 befestigt, d.h. durch eine entsprechende Fassung nicht drehbar angeordnet ist.

## Patentansprüche

1. Linearführung für ein Führungs- oder Hubelement (3), das über in einem Käfig (5) angeordnete Wälzkörper (6) an einem ortsfesten Gestell (1) abgestützt ist, **dadurch gekennzeichnet, daß** die Wälzkörper (6) in dem lastaufnehmenden Käfig (5) kraftschlüssig d.h. zur Kraftübertragung gelagert sind.

2. Linearführung nach Anspruch 1, **dadurch gekennzeichnet, daß** die Wälzkörper zylindrische Rollen (6) sind, die nebeneinander liegend in dem langgestreckten Käfig (5) in ihren Rotationsachsen drehbar gelagert sind.

3. Linearführung nach Anspruch 1 oder 2, **dadurch gekennzeichnet, daß** die Wälzkörper bzw. Rollen (6) über Nadeln (8) auf einer in dem Käfig befestigten Welle (7) drehbar gelagert sind.

4. Linearführung nach einem oder mehreren der vorstehenden Ansprüche, **dadurch gekennzeichnet, daß** an dem Führungselement (3) ein Aufspannteil (2) eines Werkstück-Aufspannsystems angeordnet ist.
